# EUROPEAN PATENT SPECIFICATION

(11) **EP 2 095 002 B1**
(45) Date of publication and mention of the grant of the patent: **26.08.2015**
(21) Application number: 07835472.7
(22) Date of filing: 21.11.2007
(51) Int. Cl.: E02F 3/627, E02F 3/36, E02F 9/22, F16L 37/56

(54) **MULTI-COUPLING COMPRISING CENTRAL DRIVING MEMBER**
EIN MITTLERES ANTRIEBSGLIED UMFASSENDE MULTIKUPPLUNG
ACCOUPLEMENT MULTIPLE COMPORTANT UN ORGANE D'ENTRAÎNEMENT CENTRAL

(30) Priority: 22.11.2006 SE 0602483
(43) Date of publication of application: 02.09.2009
(73) Proprietor: CEJN AB, 541 25 Skövde (SE)
(72) Inventor: BOHMAN, Peter, 543 34 Tibro (SE)
(74) Representative: Ljungberg, Robert
(86) International application number: PCT/SE2007/050889
(87) International publication number: WO 2008/063131

(56) References cited:
- WO-A1-2006/048316
- DE-C1- 3 135 150
- US-A- 2 837 749
- US-A- 4 611 831
- US-A- 5 417 459
- US-B1- 6 899 509
- US-B2- 7 021 668
- US-B2- 7 021 668

## Description

### TECHNICAL FIELD

The present invention relates to a multi-tube coupling according to the preamble to Patent Claim 1.

The present invention relates in particular to multi-tube couplings for pressurized fluid, compressed air, etc., which can be used advantageously in machines where parts are controlled hydraulically and/or pneumatically and the parts are arranged detachably on the machine, such as tractors and loading machines, etc. The present invention is not restricted to this application, however, and can relate advantageously to other applications for which the user-friendly connection and separation of controlled machine parts is desirable.

### BACKGROUND ART

Various types of multi-tube couplings are configured for the above-mentioned areas of application. These are often bulky and require time-consuming handling. They can also be expensive to manufacture, and they are complicated by their nature.

Various lever arm solutions are available, in which a lever arm is connected to sliding blocks arranged in the multi-tube coupling with spiral-shaped grooves intended to permit the displacement of the coupling devices of the multi-tube coupling, such as male and female parts, in a direction to and from one another. These multi-tube couplings also include electrical contacts for electrical connection for the purpose of controlling the above-mentioned machine parts.

Previously disclosed multi-tube couplings are described in, for example, EP 0 390 715 A, which depicts a multiple hydraulic coupling where three coupling plates interact in the form of connectable boxes in order to ensure the mutual fit of the coupling devices. This arrangement is intended primarily to permit the connection of hydraulic systems to an agricultural tractor, where detachable implements, such as a bucket, fork, plough, etc., are used. Also illustrated in EP 0 522 493 B2 is a multi-tube coupling where the lever arm principle is applied with the help of pins arranged to either side of a plate carrying the coupling devices. It is often the case with previously disclosed multi-tube couplings that electrical connections must be made alongside the connection of the multi-tube coupling. Previously disclosed multi-tube couplings similarly lack means for flexible applications and are not constructed in such a way that separate parts of the coupling can be connected to the part of the multi-tube coupling that is mounted on the machine. It can sometimes be appropriate to connect loose separate hoses from an implement to the machine.

It would be desirable to make available a less bulky multi-tube coupling that also includes an electrical connection and can easily be used together with separate parts of the coupling.

The object of the present invention is also to make available a multi-tube coupling which avoids the disadvantages associated with the prior art.

The above-mentioned problems have been solved with the help of the multi-tube coupling described in the introduction by means of the distinctive features indicated in the characterizing part of Patent Claim 1.

By arranging a driving device for the connection of the parts of the coupling centrally in the multi-tube coupling, the multi-tube coupling can be made available without bulk, at the same time as the coupling force does not cause torsional distortion in the multi-tube coupling. At the same time, the lateral extension of the multi-tube coupling can be as small as possible, since the electrical contact is situated in line with the driving device. Thus, a multi-tube coupling has also been made available with a small number of components for the displacement of the parts of the coupling in relation to one another.

Since the projecting device of the central spigot is so arranged as to engage in grooves in the cam sleeve that is capable of rotating in the array of couplings, so that, on rotation of the cam sleeve, the groove interacts with the projecting device to permit the displacement of the array of couplings, the connection and construction of the multi-tube coupling can be simple. The manufacture of the multi-tube coupling is cost-effective, since the cam groove of the cam sleeve can be produced by means of a simple manufacturing process, for example milling. The cam sleeve also serves as a guide means for guiding the central spigot in conjunction with the coupling procedure.

The array of couplings preferably includes a second electrical contact means for contact with the first electrical contact means.

In this way, the multi-tube coupling can be used for the transmission of electrical signals and/or current. In the event that the array of couplings consists of a block with parts of the coupling mounted therein around the driving device, an automatic electrical connection is obtained in conjunction with the connection of the multi-tube coupling. For example, the first electrical contact means can be arranged on the end of the central spigot facing towards the block in order to come into contact with the second, electrical contact means that is permanently mounted in the block and arranged at the end of the cam sleeve facing away from the base part.

The driving device appropriately consists of an operating arm mounted on the cam sleeve device that is capable of rotating in a plane oriented essentially transversely to the extent of the coupling devices.

Rotation of the cam sleeve extending parallel to the coupling devices is thus achieved. Manual operation of the multi-tube coupling can take place in this way in a rapid and effective manner.

Each of the other parts of the coupling in the array of couplings preferably comprises a first female part facing towards the base part and a second female part facing away from the base part.

Flexible and rapid replacement of the hose package for different hydraulic implements can be effected by allowing the bores for the parts of the coupling in the block to accommodate, on the one hand, coupling sections matching the parts of the coupling of the base part and, on the other hand, matching hose connections for the desired machine parts. For example, quick-couplings are used with a stop washer and a snap-in lock on the part of the block facing away from the base part.

The multi-tube coupling appropriately comprises a first and a second protective part that are capable of connection to one another, the first protective part being capable of connection to the array of couplings, and the second protective part being capable of connection to the base part.

Dust protection for the multi-tube coupling has been achieved in this way when the base part and the array of couplings are not connected together, which is advantageous, for example, for a tractor which is moving over the ground. The array of couplings is then parked in a parking position in the first protective part, which is secured to the tractor.

The array of couplings preferably comprises an essentially homogenous block, through which the other parts of the coupling extend.

Manufacture can be made cost-effective in this way, for example because an aluminium profile can be extruded and then cut to appropriate lengths, which are drilled to receive the other parts of the coupling.

### BRIEF DESCRIPTION OF DRAWINGS

The present invention is explained in greater detail below with reference to the accompanying drawings, in which schematically:
FIGS. 1a-b depict a multi-tube coupling according to a first embodiment respectively disconnected and connected together;
FIG. 1c which does not represent the invention, depicts the functionality of the multi-tube coupling illustrated in FIG. 1a in respect of its flexible use;
FIG. 2 depicts a multi-tube coupling having six coupling devices;
FIGS. 3a-3b depict a vehicle with an implement in which the multi-tube coupling is in use;
FIG. 4 depicts a multi-tube coupling having five coupling devices and a driving device arranged centrally;
FIG. 5 depicts an array of couplings of a multi-tube coupling in the form of a coupling block according to a preferred embodiment in the disconnected position;
FIG. 6 depicts the base part of the multi-tube coupling consisting of a central spigot in the driving device with a first electrical contact means;
FIG. 7 depicts the multi-tube coupling in the connected position;
FIG. 8 depicts the array of couplings in FIG. 5 with the coupling block not illustrated;
FIG. 9 depicts the central spigot and the cam sleeve in the driving device; and
FIG. 10 depicts one of the other parts of the coupling in the coupling block.

### MODE(S) FOR CARRYING OUT THE INVENTION

The present invention is now described as an illustrative embodiment. In the interests of greater clarity, components without significance for the invention have been omitted from the drawing. The same details that appear in several figures may lack a reference designation in certain cases, although they correspond to those that do have a reference designation.

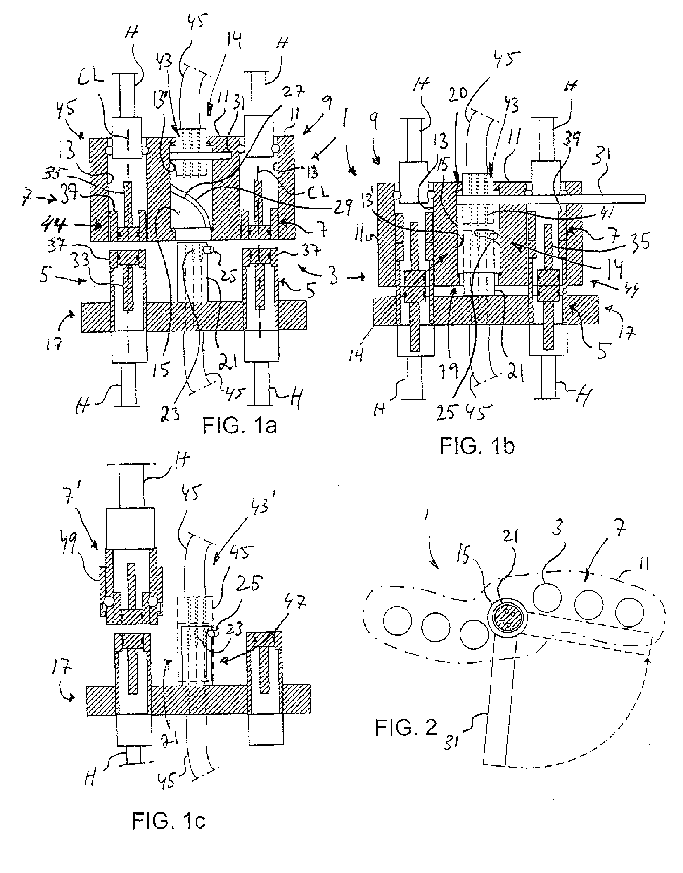

FIG. 1a depicts schematically a multi-tube coupling 1 according to a first embodiment consisting of two parallel coupling devices 3, that is to say their centre lines CL are oriented parallel with one another. Each of the coupling devices 3 consists of matching first and second parts 5, 7 of the coupling for the transfer of fluid. The first part of the coupling is a male part 5 or a so-called nipple part. The second part 7 of the coupling is a female part and is an integrated part of an array 9 of couplings comprising a block 11 made of aluminium with bores 13, 13' accommodating the two female parts 7 together with a cam sleeve device 15 in a driving device 14 in the form of a circular, elongated hollow sleeve that is used for driving the block 11 towards a base part 17. The sleeve 15 is supported in the block 11 by a lower and an upper bearing 19, 20 and is capable of rotating freely in the central bore 13' in the block 11.

The base part 17 consists of the two male parts 5 and a central spigot 21 incorporated in the driving device 14 and arranged for the displacement of the female parts 7 in the block 11 in the direction of the base part 17. The central spigot 21 of the driving device 14 is positioned essentially centrally between the male parts 5 in the base part 17. The central spigot 21 comprises a first electrical contact means 23 in the form of plug sockets and consists of a projecting device 25 in the form of a driving pin. The cam sleeve device 15 that is capable of rotating in the array 9 of couplings, or the block 11, comprises a screw-shaped cam surface 27 intended for engagement with the projecting device 25 in the central spigot 21. The cam surface 27 is contained in a groove 29 milled in the sleeve 15, which groove extends in the form of a spiral in the wall of the sleeve 15 around a central axis in the sleeve oriented parallel with the centre lines CL of the coupling devices 3.

By arranging a driving device 14 for the connection of the parts 5, 7 of the coupling together centrally in the multi-tube coupling 1, the multi-tube coupling 1 can be made available without bulk, at the same time as the coupling force does not cause torsional distortion in the multi-tube coupling 1.

At the same time, the lateral extension of the multi-tube coupling 1 can be as small as possible, since the electrical contact 23 is situated in line with the driving device 14. Thus, a multi-tube coupling 1 has also been made available with a small number of components, at the same time as the displacement of the parts 5, 7 of the coupling towards one another can take place in a simple manner. The manufacture of the multi-tube coupling 1 is cost-effective as a result, since the cam groove 29 of the cam sleeve 15 can be produced by means of a simple manufacturing process. The cam sleeve 15 also serves as a guide means for guiding the central spigot 21 in conjunction with the coupling procedure.

The multi-tube coupling 1 in FIG. 1a is depicted in FIG. 1b in an almost fully completed connected position. A handle 31 is attached to the cam sleeve 15 and is capable of rotation in a plane oriented essentially transversely to the longitudinal extent of the coupling devices 3. Rotation of the handle 31 causes the cam sleeve 15 containing the cam groove 29 to rotate, in conjunction with which the cam sleeve 15 in contact with the lower bearing 19 drives the block 11 towards the base part 17, because the driving pin 25 of the central spigot 21 is positioned in the groove 29 and the driving pin 25 is pressed against the lower 27 in the groove 29 in conjunction with the rotation of the cam sleeve 15. A termination on the cam groove 19 is made essentially flat in order to permit the secure locking of the parts 5, 7 of the coupling to one another. The parts 5, 7 of the coupling open as a result of the valve 33 of the nipple part being pushed into the nipple part 5 that is pre-tensioned by means of springs (not illustrated) with the help of the valve opener 35 of the female part 7 that is securely mounted on the female part 7. At the same time, the sleeve body 37 of the male part 5 pushes the valve sleeve 39 of the female part 7 in a direction inwards into the block 11, and fluid is able to pass. The final connection stage involves the plug sockets 23 in the upper end of the central spigot 21 facing towards the block 11 coming into contact with plug contacts 41 in a second electrical contact means 43 that is permanently mounted in the block 11 for contact with the first electrical contact means 23. The second electrical contact means 43 is arranged on the end of the cam sleeve 15 facing in a direction away from the base part 17 and projects inwards for a distance into the cam sleeve 15. The cam sleeve 15 is thus capable of rotating about the second electrical contact means 43. Electric cables 45 extend from the respective electrical contact 23, 43. Hydraulic lines are designated by H.

In this way, the multi-tube coupling 1 can be used for the transmission of electrical signals and/or current. An automatic electrical connection is made in conjunction with the connection of the multi-tube coupling 1, and there is no need for any adjacent electrical connection to be made.

Each of the other parts of the coupling in the block 11 consists of, on the one hand, a first female part 44 facing towards the base part 17 and, on the other hand, a second female part 45 facing away from the base part 17. This second female part 45 is a female part which can be connected rapidly and easily to a male part of the hydraulic hose H in the form of a WEO "click-to-connect" coupling. This means that hydraulic hoses H can be simply connected to and disconnected from the block 11 without the need to use special tools or adjustable spanners.

Flexible and rapid replacement of the hose package for different hydraulic implements can be effected by allowing the bores 13 for the parts 5, 7 of the coupling in the block 11 to accommodate, on the one hand, first female parts 44 matching the male parts 5 of the base part 17 and, on the other hand, hose connections for desired machine parts matching second female parts 45.

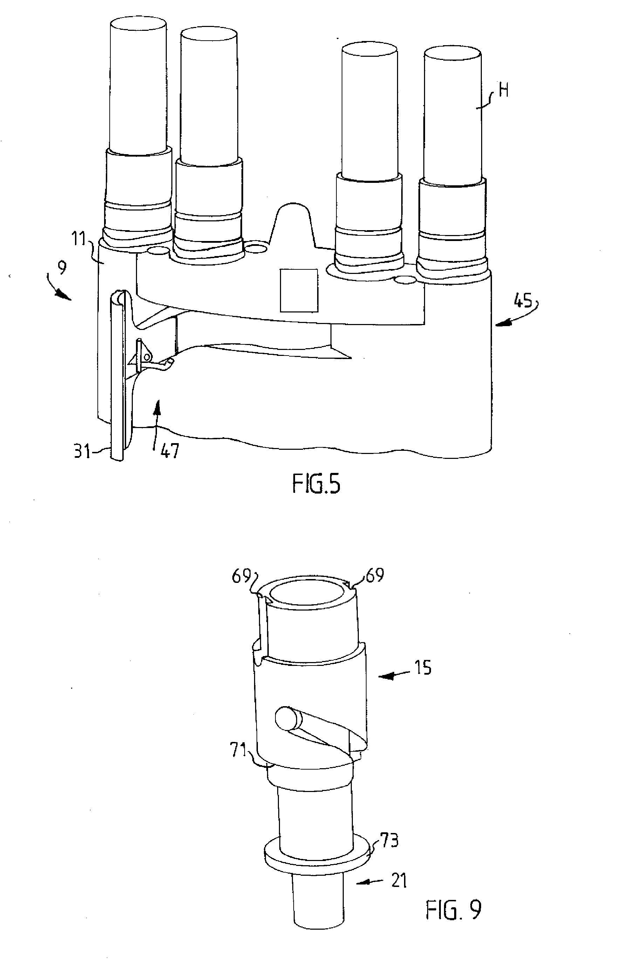

In conjunction with the completed rotation of the handle 31, the handle 31 is locked against the block 11 (see FIG. 5) by means of a hook lock 47, and the parts 5, 7 of the coupling are held against one another by force by the engagement of the driving pin 25 in the cam groove 29 of the cam sleeve 15, at the same time as a satisfactory electrical connection is produced.

FIG. 1c which is not in accordance with the invention, depicts the functionality of the multi-tube coupling 1 illustrated in FIG. 1a in respect of its flexible use. The array 9 of couplings also comprises a separate third electrical contact means 43', which is capable of being connected to the first electrical contact means 23 on the central spigot 21. A plug contact in the electrical contact means 43' is arranged inside a plastic sleeve 45 (broken line). The plastic sleeve 45 has a groove 47, which is enlarged at its termination end in order to accommodate the driving pin 25 (the projecting part). In conjunction with the connection of the plug contact, the plastic sleeve 45 is applied over the central spigot 21 on the base part 17, and the opening in the groove 47 is fitted onto the driving pin 25. In conjunction with a satisfactory electrical contact connection, the driving pin 25 snaps into engagement in the enlarged area, and the plastic sleeve 45 including the third electrical contact means 43' is fitted. At the same time, any desired hydraulic hoses H can be connected to the first parts 5 of the coupling in the base part 17. The hydraulic hoses H comprise female parts with a locking sleeve 49 enclosing the sleeve body, known as quick-couplings, in which case the multi-tube coupling 1 can also be used for separate, second parts 7' of the coupling according to a modular system.

FIG. 2 depicts an embodiment consisting of six coupling devices 3, in which female parts are arranged in the base part and male parts are arranged in the block 11. The array 9 of couplings comprises a homogeneous block 11 of aluminium, through which the other parts 7 of the coupling extend. Manufacture can be made cost-effective in this way, for example because an aluminium profile can be extruded and then cut to appropriate lengths, which are drilled to receive the other parts 7 of the coupling.

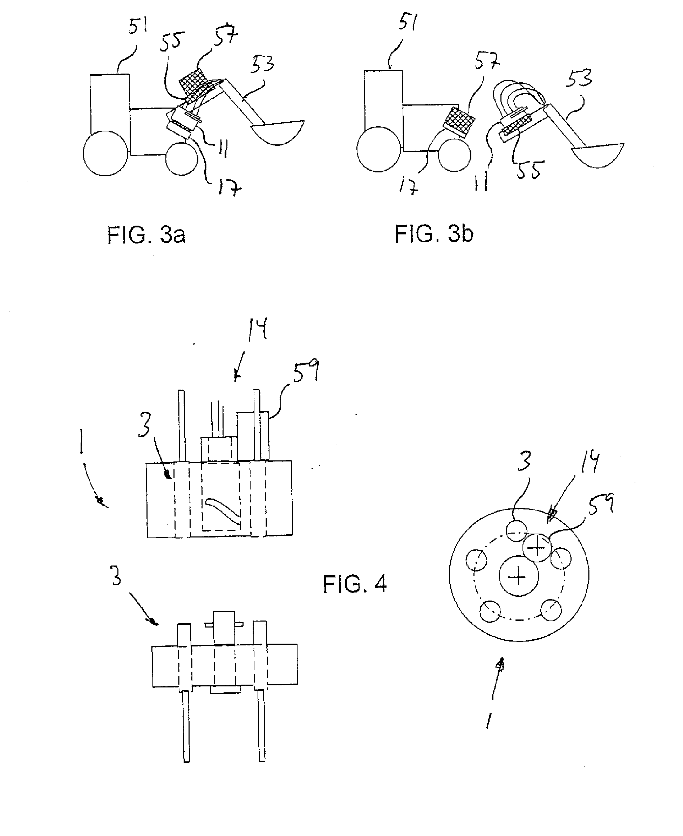

FIGS. 3a-3b depict schematically a vehicle 51 with hydraulically controlled implements in which the multi-tube coupling 1 is in use (the multi-tube coupling is enlarged in the Figure). FIG. 3a depicts a bucket arm 53 connected to the vehicle 51. The multi-tube coupling 1 is connected, and operation of the bucket arm 53 can be effected from the driver's cab of the vehicle 51. The multi-tube coupling 1 consists of a first 55 and a second 57 protective part that are capable of connection to one another. The first protective part 55 is securely attached to the bucket arm 53. The second protective part 57 is detachably attached to the first protective part 55, so that dirt and dust are unable to contaminate the interiors of the protective parts. When the vehicle 51 is to be disconnected from the bucket arm 53, see FIG. 3b, the second protective part 57 is removed from the first protective part 55, the multi-tube coupling 1 is separated, and the block 11 is instead positioned in the first protective part 55 (parking position). The second protective part 57 is positioned on the base part 17. Dust protection for the multi-tube coupling 1 has been achieved in this way when the base part 17 and the array 9 of couplings (including the block 11) are not connected together, which is advantageous, for example, in the case of a tractor which is moving over the ground.

FIG. 4 depicts a multi-tube coupling 1 having five coupling devices 3 and a driving device 14 arranged centrally. The driving device 14 comprises an electric motor 59 that is controlled by means of a control unit (not illustrated) situated at a distance from it.

FIG. 5 depicts an array 9 of couplings of a multi-tube coupling 1 in a coupling block 11 according to a preferred embodiment in the disconnected position. FIG. 5 depicts the operating arm 31 comprising a pre-tensioned hook lock 47 comprising a hook which fits into the side of the block 11. The user can also lock the operating arm 31 to the block 11 when the block 11 has been parked in the parking position. Hydraulic lines H connected to the second female parts 45 of the block 11 by means of a "plug-in connection" are depicted in FIG. 5. The operating arm 31 is so arranged as to be capable of being "locked" in the opened position by means of spring-assisted ball devices (not illustrated).

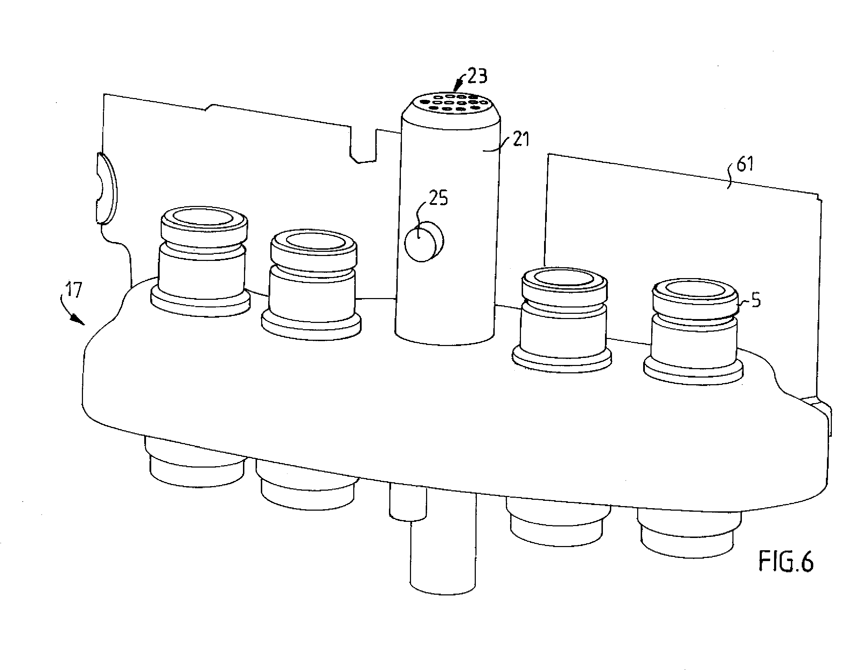

FIG. 6 depicts the base part 17 of the multi-tube coupling 1 comprising a central spigot 21 in the driving device with the first electrical contact means 23. A fixing plate 61 supports the base part. The fixing plate 61 can be mounted on a vehicle. The central spigot 21 is permanently attached to the base part 17. A bore in the central spigot 21 receives the first electrical contact means 23, comprising a plug socket. Depicted in FIG. 6 are four male parts 5 that are positioned symmetrically around the central spigot 21. The central spigot 21 comprises two driving pins 25 (projecting devices, of which only one is visible). The driving pins 25 are intended to be driven by the cam groove 29 in the cam sleeve (see FIG. 9) in a direction parallel with the centre line CL of the coupling devices 3.

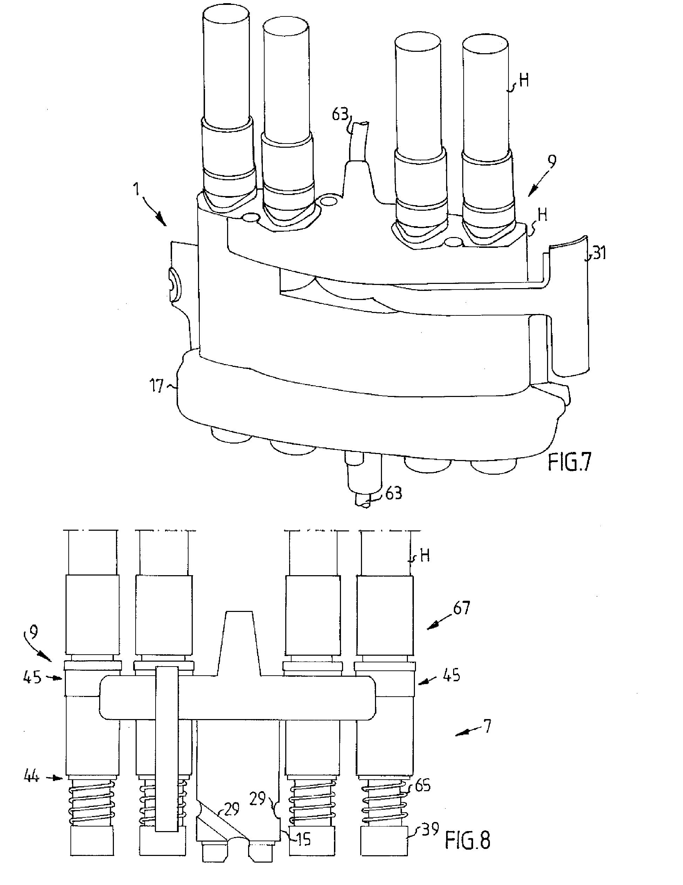

FIG. 7 depicts the multi-tube coupling 1 in the connected position, in which the block 11 has been connected to the base part 17. Internal details are not illustrated in the Figure. The operating arm 31 has been rotated to the side, causing the cam sleeve (not illustrated) to drive the block 11 against the base part 17, whereby coupling of the coupling devices 3 takes place at the same time as the electrical contact means 23, 43 is connected for the transmission of signals and/or current. The electric cables 63 are thus in electrical connection with one another.

FIG. 8 depicts the array 9 of couplings in FIG. 5 with the coupling block 11 not illustrated. Pre-tensioned springs 65 are visible situated outside the valve sleeves 39 on the first female parts 44 facing towards the base part. The valve sleeves 39 are capable of sliding in the bores 13 in the block 11 arranged for the second coupling parts 7, that is to say the first female parts 44 and the second female parts 45. The second female parts 45 serve the purpose of snapping into engagement with male parts 67 on the hydraulic hoses H. The rotatable cam sleeve 15 is accommodated inside the central bore 13' in the block. Illustrated in FIG. 8 are two spiral-shaped cam grooves 29, which extend through the wall of the sleeve 15 with their entrances positioned opposite one another at the end of the sleeve 15 facing towards the base part 17.

FIG. 9 depicts the central spigot 21 and the cam sleeve 15 in the driving device released from the base part 17 and the block 11 respectively for illustrative purposes. Recesses 69, into which the operating arm 31 can be fitted, are arranged at the end of the cam sleeve 15 facing away from the base part 17. A shoulder 71 on the cam sleeve 15 is configured to bear against a plastic washer in the block 11 in order to retain the cam sleeve 15 in the block 11 in the axial direction. The central spigot 21 comprises a flange 73 for bearing against the base part 17 and absorbing axial forces. A pin (not illustrated) extends through the base part 17 and the central spigot 21 in order to prevent the central spigot 21 from rotating relative to the base part 17.

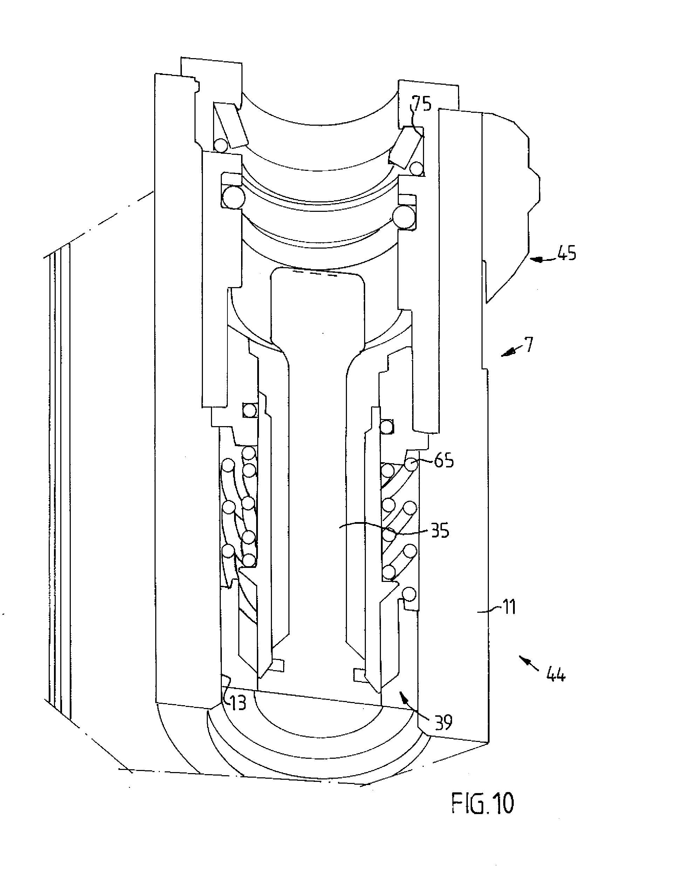

FIG. 10 depicts one of the other parts 7 of the coupling in a section of the coupling block 11, that is to say the two, consecutively arranged, first and second female parts 44, 45 in the block 11. A valve actuator 35 for actuating the valve spindle 33 of the male part 5 is arranged securely inside the first female part 44 by means of a collar (not illustrated) positioned against the rear part of the first female part 44. Valve sleeves 39 are capable of being displaced in a direction into the block 11 and are pre-tensioned by means of springs 65. The second female part 45 comprises latching hooks 75 made of hardened, yellow zinc chromated steel, which are caused to spring out of the way as the assembly stop (not illustrated) is removed from the coupling end of the hydraulic hose and when the coupling end is pushed in the direction of the block 11. In conjunction with assembly, the coupling end is simply snapped into the second female part 45 (so-called WEO "plug-in" connections).

The present invention must not be regarded as being restricted to the illustrative embodiments described above, and modifications and combinations of these can occur within the scope of the present invention. In addition to aluminium, for example, the material selected for the block can be plastic, steel or other metals. In addition to containing the necessary bores to accommodate parts of the coupling and the cam sleeve and other parts of the driving device, the block can be homogeneous or partially homogeneous, or can be of shell construction. The number of driving pins and cam grooves can vary. Similarly, the number of coupling devices can vary. Naturally, the coupling parts of the base part can consist of female parts, instead of male parts, and the block can consist of male parts in the other coupling parts facing towards the base part and, instead of second female parts, can also consist of second male parts.

## Claims

1. Multi-tube coupling comprising a least two parallel coupling devices (3), each comprising matching first and second parts (5, 7) of the coupling for the transfer of fluid; the multi-tube coupling (1) comprising a base part (17) holding said first parts (5) of the coupling and a driving device (14) arranged for the displacement of said second parts (7) of the coupling in an array (9) of couplings in the direction of the base part (17), **characterized in that** the driving device (14) comprises a central spigot (21), essentially centrally located between the coupling devices (3) and non-rotatably attached to the base part (17), which central spigot comprises a first multiple conductor electrical contact means (23); and a cam sleeve device (15) capable of rotating in the array (9) of couplings and having a screw-shaped cam surface (27) for engagement with projections (25) from the central spigot (21), as well as a second multiple conductor electrical contact means (43) for making contact with the first electrical contact means (23) .

2. Multi-tube coupling according to Claims 1 or 2, in which the driving device (14) comprises an operating arm (31) mounted on the cam sleeve device (15) and capable of rotating in a plane oriented essentially transversely to the extent of the coupling devices (3).

3. Multi-tube coupling according to any of Claims 1-2, in which each of the other parts (7) of the coupling in the array (9) of couplings comprises a first female part (44) facing towards the base part (17) and a second female part (45) facing away from the base part (17).

4. Multi-tube coupling according to any of the preceding Claims, in which the multi-tube coupling comprises a first and a second protective part (55, 57) that are capable of being connected to one another, the first protective part (55) being capable of being connected to the array (9) of couplings, and the second protective part (57) being capable of being connected to the base part (17).

5. Multi-tube coupling according to any of the preceding Claims, in which the array (9) of couplings comprises an essentially homogeneous block, through which the other parts (7) of the coupling extend.

## Patentansprüche

1. Eine Mehrrohrkupplung, beinhaltend mindestens zwei parallele Kupplungsvorrichtungen (3), die jeweils zusammenpassende erste und zweite Teile (5, 7) der Kupplung für den Transfer von Fluid beinhalten; wobei die Mehrrohrkupplung (1) Folgendes beinhaltet: ein Basisteil (17), das die ersten Teile (5) der Kupplung hält, und eine Antriebsvorrichtung (14), die zur Verschiebung der zweiten Teile (7) der Kupplung in einer Anordnung (9) von Kupplungen in der Richtung des Basisteils (17) eingerichtet ist, **dadurch gekennzeichnet, dass** die Antriebsvorrichtung (14) Folgendes beinhaltet:
einen zentralen Zapfen (21), der zwischen den Kupplungsvorrichtungen (3) im Wesentlichen zentral angeordnet ist und nicht drehbar an dem Basisteil (17) angebracht ist, wobei der zentrale Zapfen ein erstes elektrisches Mehrfachleiterkontaktmittel (23) beinhaltet; und eine Nockenhülsenvorrichtung (15), die in der Lage ist, sich in der Anordnung (9) von Kupplungen zu drehen, und die eine schraubenförmige Nockenoberfläche (27) zum Eingriff mit Vorsprüngen (25) von dem zentralen Zapfen (21) aufweist, sowie ein zweites elektrisches Mehrfachleiterkontaktmittel (43) zum Herstellen eines Kontakts mit dem ersten elektrischen Kontaktmittel (23).

2. Mehrrohrkupplung gemäß den Ansprüchen 1 oder 2, wobei die Antriebsvorrichtung (14) einen Betätigungsarm (31) beinhaltet, der auf der Nockenhülsenvorrichtung (15) montiert ist und in der Lage ist, sich in einer Ebene, die im Wesentlichen transversal zu der Erstreckung der Kupplungsvorrichtungen (3) ausgerichtet ist, zu drehen.

3. Mehrrohrkupplung gemäß einem der Ansprüche 1-2, wobei jedes der anderen Teile (7) der Kupplung in der Anordnung (9) von Kupplungen ein erstes aufnehmendes Teil (44), das zu dem Basisteil (17) hin weist, und ein zweites aufnehmendes Teil (45), das von dem Basisteil (17) weg weist, beinhaltet.

4. Mehrrohrkupplung gemäß einem der vorhergehenden Ansprüche, wobei die Mehrrohrkupplung ein erstes und ein zweites Schutzteil (55, 57) beinhaltet, die in der Lage sind, miteinander verbunden zu werden, wobei das erste Schutzteil (55) in der Lage ist, mit der Anordnung (9) von Kupplungen verbunden zu werden, und das zweite Schutzteil (57) in der Lage ist, mit dem Basisteil (17) verbunden zu werden.

5. Mehrrohrkupplung gemäß einem der vorhergehenden Ansprüche, wobei die Anordnung (9) von Kupplungen einen im Wesentlichen homogenen Block beinhaltet, durch den sich die anderen Teile (7) der Kupplung erstrecken.

## Revendications

1. Couplage multitube comprenant au moins deux dispositifs de couplage parallèles (3), comprenant chacun des premières et deuxièmes parties assorties (5, 7) du couplage pour le transfert de fluide ; le couplage multitube (1) comprenant une partie de base (17) tenant lesdites premières parties (5) du couplage et un dispositif d'entraînement (14) arrangé pour le déplacement desdites deuxièmes parties (7) du couplage dans un ensemble (9) de couplages dans la direction de la partie de base (17), **caractérisé en ce que** le dispositif d'entraînement (14) comprend un ergot central (21), situé de façon essentiellement centrale entre les dispositifs de couplage (3) et attaché de façon à ne pas pouvoir tourner sur la partie de base (17), lequel ergot central comprend un premier moyen de contact électrique de conducteur multiple (23) ; et un dispositif de manchon de came (15) à même de tourner dans l'ensemble (9) de couplages et ayant une surface de came en forme de vis (27) pour une mise en prise avec des saillies (25) de l'ergot central (21), ainsi qu'un deuxième moyen de contact électrique de conducteur multiple (43) pour effectuer un contact avec le premier moyen de contact électrique (23).

2. Couplage multitube selon les revendications 1 ou 2, dans lequel le dispositif d'entraînement (14) comprend un bras de fonctionnement (31) monté sur le dispositif de manchon de came (15) et à même de tourner dans un plan orienté de façon essentiellement transversale par rapport à l'étendue des dispositifs de couplage (3).

3. Couplage multitube selon n'importe lesquelles des revendications 1 à 2, dans lequel chacune des autres parties (7) du couplage dans l'ensemble (9) de couplages comprend une première partie femelle (44) faisant face vers la partie de base (17) et une deuxième partie femelle (45) faisant face en s'éloignant de la partie de base (17).

4. Couplage multitube selon n'importe lesquelles des revendications précédentes, le couplage multitube comprenant une première et une deuxième partie protectrice (55, 57) qui sont à même d'être raccordées l'une à l'autre, la première partie protectrice (55) étant à même d'être raccordée à l'ensemble (9) de couplages, et la deuxième partie protectrice (57) étant à même d'être raccordée à la partie de base (17).

5. Couplage multitube selon n'importe lesquelles des revendications précédentes, dans lequel l'ensemble (9) de couplages comprend un bloc essentiellement homogène, à travers lequel les autres parties (7) du couplage s'étendent.
